# EUROPEAN PATENT APPLICATION

(11) **EP 2 161 485 A2**
(43) Date of publication of application: **10.03.2010**
(21) Application number: 09011037.0
(22) Date of filing: 28.08.2009
(51) Int. Cl.: F16L 11/133

(54) **Compression resistant floating hose for reeling applications**

(30) Priority: 04.09.2008 US 94153 P
(71) Applicant: Veyance Technologies, Inc., Fairlawn, OH 44333-3023 (US)
(72) Inventor: Bolonhezi, Mauricio, 05265-040 Sao Paulo (BR); Pereira de Lucena, Waldir, 02013-080, Sao Paulo (BR); Chevalier, Ronald M., J2W-1S1 St-Jean-Sur-Richelieu Quebec (CA)
(74) Representative: Dreiss

(57) **Abstract**

Floating hose (1) is normally comprised of a carcass (2) that is covered with a layer of foam (4) to provide buoyancy. The foam (4) can be deformed and compressed by being repeatedly reeled onto a drum under conditions of high axial forces (reeling forces plus hose weight). The propensity for the foam layer (4) to become compressed is aggravated in typical conditions where the hose is stored on a reel for extended periods and is on the reel more than it is in the water. In any case, compression damage causes the hose (1) to lose buoyancy which can ultimately result in the hose sinking under conditions of normal use. It would accordingly be desirable to develop a floating hose (1) that minimized the permanent damage caused by the foam layer (4) being compressed to high levels over and over again. The floating hose (1) of this invention is resistant to damage that can be caused by axial forces, such as those encountered while being collected on a reel. More specifically, the floating hose (1) of this invention is not as susceptible to being damaged by compression as conventional floating hoses. This is by virtue of the floating hoses (1) of this invention including anti-compression collars (3) that protect the floatation medium (4) therein from damage that can occur during routine usage. This extends the service life of the floating hoses (1) of this invention and reduces their propensity to lose buoyancy over time. The present invention more specifically discloses a floating hose comprising: a carcass (2) having an inside and an outside; a plurality of anti-compression collars (3) interspaced around the carcass; a floatation medium (4) surrounding said hose carcass (2) and said anti-compression collars (3), and an outer cover, wherein said outer cover covers (5) said floating medium (4) and said anti-compression collars (3).

## Description

This application claims benefit of United States Provisional Patent Application Serial No. 61/094,153, filed on September 4, 2008. The teachings of United States Provisional Patent Application Serial No. 61/094,153 are incorporated herein by reference in their entirety.

### Background of the Invention

The production of petroleum from off-shore locations is of growing importance in the world today. This is because vast reserves of petroleum are located under water in many locations around the world including under the North Sea, the Gulf of Mexico, off the coast of Brazil, and off the coast of California. Floating Production Storage and Offloading units (FPSOs) are typically used in the recovery of such petroleum reserves that are located under water. The FPSO may draw oil from a number of oil wells that have been drilled under water.

After being pumped the crude petroleum is temporarily stored in the FPSO. Then the crude petroleum is transferred to a shuttle tanker for delivery to a desired location, such as a petroleum refinery. However, transferring the crude oil from FPSOs to shuttle tankers at sea is an extremely demanding task because of the persisting relative movement between the vessels. During times of adverse weather conditions, such as high waves, high winds, and storms at sea, this tack becomes even more difficult. A floating hose is typically used to transfer crude oil from FPSOs to shuttle tankers.

Floating hoses typically runs from the bow and/or the stern of FPSOs to shuttle tankers. Modern shuttle tankers may have a bow manifold for charging crude oil, but many conventional shuttle tankers have a charging device consisting of a midship manifold for intake of the oil load. For this reason a relatively long loading hose is needed, from the FPSO-vessel to the midship manifold on the shuttle tanker. The separation between the vessels, between the stern of the FPSO and the bow of the shuttle tanker is generally about 50 to 200 meters, and the extension of the floating hose is normally between about 150 and 300 meters. The internal diameter of the floating hose will normally be between 6 and 24 inches and is more typically and is adapted to the actual pumping rate for the oil being charged. Conventionally the leading end of the loading hose is brought to the shuttle tanker by a dedicated auxiliary craft called a tender.

When the floating hoses are not being used to transfer petroleum they can be allowed to remain floating on the water after being released from the tankers. However, in such cases where the floating hose is left on the water the floating hose may be damaged by being struck by ships or by the shock from waves in stormy weather. In any case, hose wear occurs due to continual wave action. This can lead to a loss of the buoyancy and over time the hose can begin sink.

In the alternative, the floating hose can be hoisted onto the FPSO for storage until it is again needed for offloading crude oil to a shuttle tanker. This can be done by using a wench to pull the floating hose onto a reel. This protects the hose from exposure to waves and the inherent wear associated therewith. It also eliminates the danger of the floating hose being struck by a ship as it is floating at sea. However, pulling the hose onto a reel is not a procedure that is free of problems. For instance, the hose can be damaged by compression as it is pulled onto the reel and subsequently stored thereon.

Floating hose is normally comprised of a carcass that is covered with a layer of foam to provide buoyancy. The foam can be deformed and compressed by being repeatedly reeled onto a drum under conditions of high axial forces (reeling forces plus hose weight). The propensity for the foam layer to become compressed is aggravated in typical conditions where the hose is stored on a reel for extended periods and is on the reel more than it is in the water. When needed the floating hose is unreeled and almost immediately thereafter enters the water. This gives the hose virtually no time to recover from the compression under which it was subjected while being on the reel. In any case, temporary and permanent compression damage causes the hose to loose buoyancy and can ultimately result in the hose sinking under conditions of normal use. It would accordingly be desirable to develop a floating hose that resists damage caused by being hoisted and stored on reels.

### Summary of the Invention

The floating hose of this invention is resistant to damage that can be caused by axial and lateral forces, such as those encountered while being collected on a reel. More specifically the floating hose of this invention is not as susceptible to being damaged by compression as conventional floating hoses. This is by virtue of the floating hoses of this invention including anti-compression collars that protect the floatation medium therein from excessive compression that can occur during routine usage. This extends the service life of the floating hoses of this invention and reduces their propensity to lose buoyancy over time.

The present invention more specifically discloses a floating hose comprising: a carcass having an inside and an outside; a plurality of anti-compression collars interspaced around the carcass; a floatation medium surrounding said hose carcass and said anti-compression collars, and an outer cover, wherein said outer cover covers said floating medium and said anti-compression collars.

### Brief Description of the Drawings

- Figure 1: is a schematic cross-sectional view of a floating hose without the anti-compression collars of this invention showing deformation caused by an external load.
- Figure 2: is a schematic cross-sectional view of a floating hose of the present invention illustrating the flotation media used to provide the hose with buoyancy and anti-compression collars that act to protect the flotation media.
- Figure 3: is a schematic cross-sectional view of a floating hose of the present invention which includes anti-compression collars showing deformation caused by an external load.
- Figure 4: is a schematic cross-sectional view of a floating hose of the present invention illustrating the flotation media used to provide the hose with buoyancy which is equipped with tapered anti- compression collars that act to protect the flotation media.

### Detailed Description of the Invention

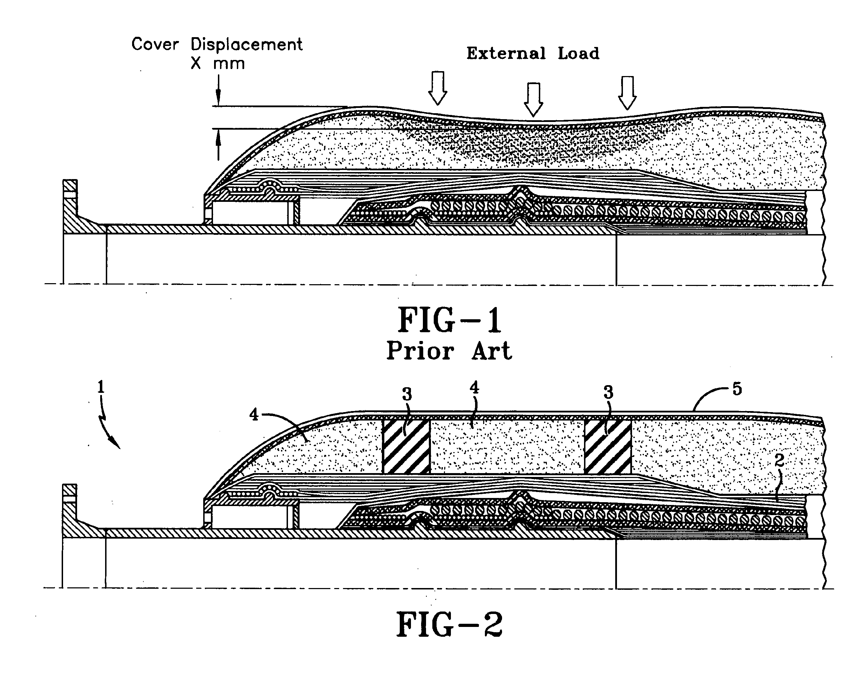

The floating hose 1 of the present invention as depicted in Figure 1 includes a carcass 2 having an inside and an outside, a plurality of anti-compression collars 3 interspaced around the carcass, a floatation medium 4 surrounding the hose carcass and the anti-compression collars 3, and an outer cover 5. This type of floating hose typically has an inside diameter which is within the range of about 15 cm to 60 cm and an outside diameter which is within the range of about 25 cm to about 100 cm. It more typically has an inside diameter which is within the range of about 30 cm to 60 cm and an outside diameter which is within the range of about 40 cm to about 100 cm. For instance, many commercial floating hoses of this type have an inside diameter of 50 cm (20 inches) and an outside diameter of 95 cm (38 inches).

The carcass 2 is of a tubular shape and is typically comprised of a base submarine hose complete with end fittings. The hose carcass 2 is surrounded by a floatation medium 4 which is typically comprised of several layers of closed cell foam. The closed cell foam can be multiple layers of a polymeric foam, such as polyurethane foam. The floatation medium will have a density and a total volume that is sufficient to provide the floating hose 1 with a reserve buoyancy when filled with sea water which is within the range of 0% to 40%. The floating hose will typically have a reserve buoyancy when filled with sea water which is within the range of 10% to 40% and will more typically have a reserve buoyancy of 15% to 35%. In most cases the floating hose will have a reserve buoyancy when filled with sea water of about 25%. In fact, many specifications call for a reserve buoyancy of at least 20%.

The floating hose of this invention will include a carcass and can optionally include a second carcass to attain a higher level of performance and better durability. The hose carcass 2 is typically comprised of a cured rubber which can be reinforced with a fabric, such as nylon or polyester, and/or steel reinforcements. For instance, the hose carcass can be reinforced with Kevlar® aramid fiber. The hose carcass will typically be comprised of a cured rubber, such as natural rubber, synthetic polyisoprene rubber, styrene-butadiene rubber (SBR), polyneoprene rubber, styrene-isoprene rubber, polybutadiene rubber, styrene-isoprene-butadiene rubber, nitrile rubber, carboxylated nitrile rubber, ethylene-propylene-diene monomer rubber (EPDM), or a mixture thereof. The hose carcass will also typically include one or more liners. To provide desired levels of chemical resistance such liners will generally be comprised of a nitrile rubber. To attain excellent heat resistance, oil resistance, and chemical resistance fluoroelastomers, such as Viton® fluoroelastomer, can be used in making the liner.

The floatation medium can be provided by wrapping multiple layers of closed cell foam around the hose carcass. A thin layer of rubber is preferably laid between the carcass and the floatation medium. The floatation medium will normally be about 1 cm to about 20 cm thick. In other words, the floatation medium will extend outwardly from the carcass about 1 cm to about 20 cm. The floatation medium will preferably be about 10 cm to about 15 cm thick and will most preferably be about 12 cm to about 14 cm thick.
The anti-compression collars are spaced along the length of the floating hose at intervals that are normally about 0.25 meters to 5 meters apart and are more typically about 0.5 meters to 5 meters apart. The anti-compression collars are more preferably spaced along the length of the hose at intervals of 0.75 meters to 3 meters. The anti-compression collars with more preferably be spaced about 1 meter to 2 meters apart. The anti-compression collars can be made with any polymeric material that provides the needed level of stiffness to protect the flotation medium. It is preferred for the material used in making the anti-compression collars to be of a relatively low density. The anti-compression collars of this invention are normally comprised of a relatively hard cured rubber which is co-cured to the carcass of the hose.

The anti-compression collars optimally extend outwardly from the carcass about 60% to about 100% as far as the floatation medium extends outwardly from the carcass. In many cases the anti-compression collars optimally extend outwardly from the carcass about 70% to about 90% as far as the floatation medium extends outwardly from the carcass. The shape of the anti-compression collars is not critical.

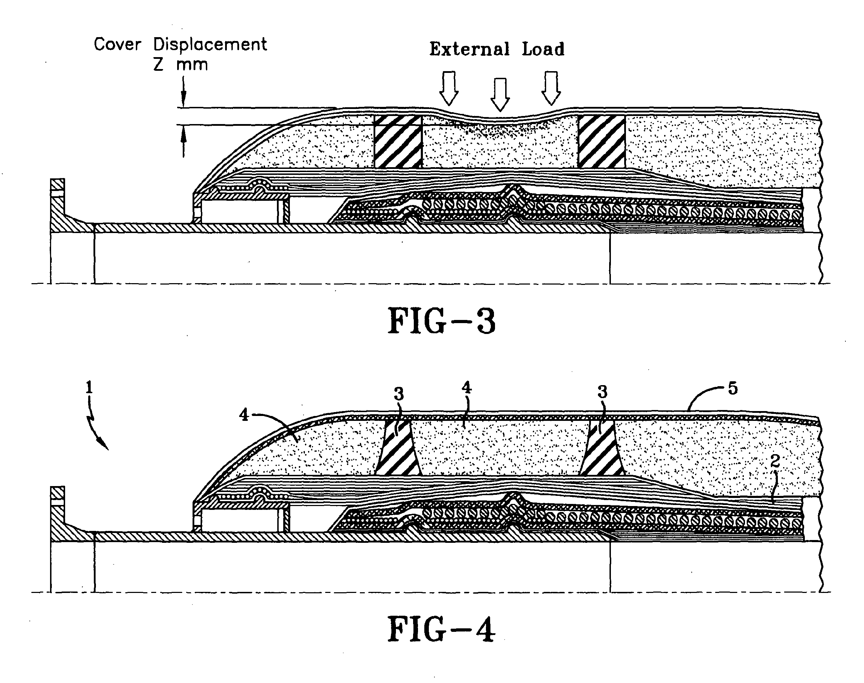

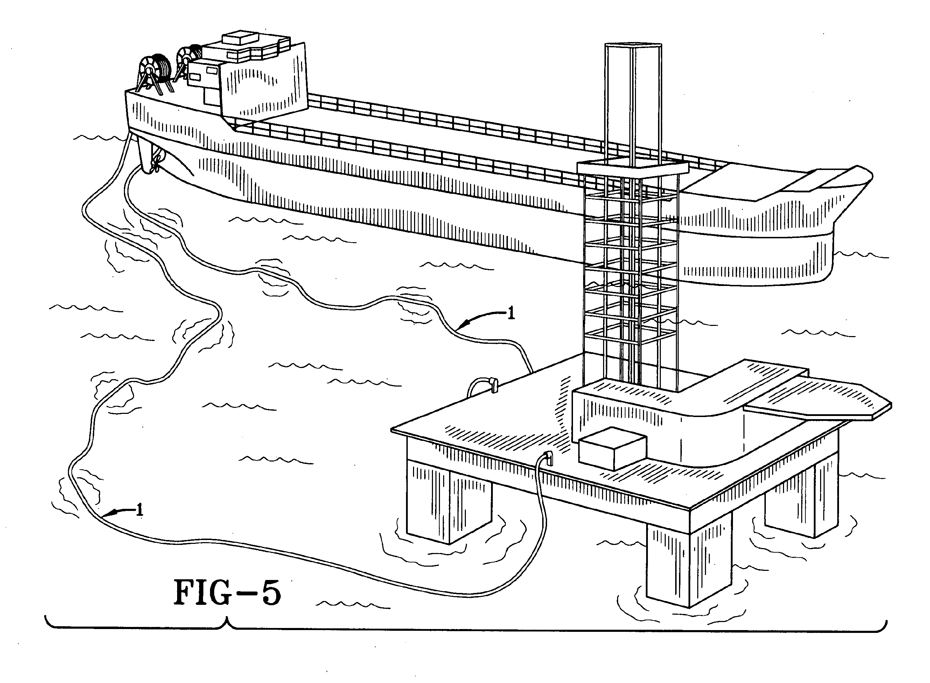

However, in many cases it is preferred for the anti-compression collars 3 to be tapered from the carcass 2 as they extend outwardly toward the outer wall 5 of the floating hose. Tapered anti-compression collars 3 are shown in Figure 4.

The flotation medium optimally surrounds the hose carcass and the anti-compression collars. The flotation medium is surrounded outwardly with the outer cover of the hose. The outer cover is normally comprised of textile breakers with a rubber cover (a textile reinforced rubber cover). The outer cover can optionally include a polyurethane coating. In any case, the outer cover is designed to contain and protect the flotation medium from water damage and environmental conditions.

Figure 2 is a schematic cross-sectional view of a floating hose without the anti-compression collars of this invention showing deformation caused by an external load. Under the external load depicted the outer cover and foam flotation medium are displaced inwardly a displacement distance of "x" toward the carcass of the hose. In this area of compression the foam flotation medium can become permanently damaged and fail to reflex back into its original size and shape. As the foam flotation medium becomes further compressed over time its volume is reduced and its ability to provide buoyancy is compromised. This can ultimately leads to the hose sinking under the surface of the water in which it is used.

Figure 3 is a schematic cross-sectional view of a floating hose of the present invention that includes anti-compression collars wherein the hose is under an external load that caused a deformation to the outer cover and the foam floatation medium. In this case the outer cover and foam flotation medium are displaced inwardly a displacement distance of "z" toward the carcass of the hose. It should be noted that the displacement distance z in the case of hoses with anti-compression collars is less than the displacement distance x which is experienced without them as illustrated in Figure 2. By reducing the displacement distance the propensity for the foam flotation medium to become permanently compress and for buoyancy to be lost is reduced. Thus, the anti-compression collars act to protect the floating hose from damage during normal usage.

While certain representative embodiments and details have been shown for the purpose of illustrating the subject invention, it will be apparent to those skilled in this art that various changes and modifications can be made therein without departing from the scope of the subject invention.

## Claims

1. A floating hose having a carcass with an inside and an outside, a floatation medium surrounding said hose carcass and an outer cover, wherein said outer cover covers said floatation medium, said floating hose being **characterized by** further including a plurality of anti-compression collars interspaced around the carcass, wherein said anti-compression collars are surrounded by the floatation medium and covered by the outer cover.

2. The floating hose of claim 1 wherein said anti-compression collars are comprised of a cured rubber and wherein said anti-compression collars are vulcanized to the hose carcass.

3. The floating hose of any of the preceding claims wherein said floatation medium is a foam.

4. The floating hose of any of the preceding claims wherein the floating hose has a reserve buoyancy of at least 15% when filled with sea water.

5. The floating hose of any of the preceding claims wherein the carcass is in the form of a tube.

6. The floating hose of any of the preceding claims wherein the inside of the carcass is covered with a liner.

7. The floating hose of claim 8 wherein the liner is comprised of nitrile rubber.

8. The floating hose of any of the preceding claims wherein the carcass is comprised of styrene-butadiene rubber.

9. The floating hose of any of the preceding claims wherein the anti-compression collars extend outwardly from the carcass at least 60% as far as the floatation medium extends outwardly from the carcass.

10. The floating hose of any of the preceding claims wherein the anti-compression collars are spaced along the length of the floating hose at intervals of 0.5 meters to 5 meters.

11. The floating hose of any of claims 1 to 9 wherein the anti-compression collars are spaced along the length of the floating hose at intervals of 1 meter to 2 meters.

12. The floating hose of any of the preceding claims wherein the floatation medium extends outwardly from the carcass 6 cm to 18 cm.

13. The floating hose of any of claims 1 to 11 wherein the floatation medium extends outwardly from the carcass 10 cm to 15 cm.

14. The floating hose of any of claims 1 to 11 wherein the floatation medium extends outwardly from the carcass 12 cm to 14 cm.

15. A process for making a floating hose comprising the steps of:
placing anti-compression collars around a hose carcass, such that said anti-compression collars are interspaced along the length of said hose; and
surrounding said hose carcass and said anti-compression members with a floating medium; and,
surrounding said floating medium with and outer cover.
